# EUROPEAN PATENT APPLICATION

(11) **EP 4 782 665 A1**
(43) Date of publication of application: **29.07.2026**
(21) Application number: 25153587.8
(22) Date of filing: 23.01.2025
(51) Int. Cl.: F01L 3/20, F02B 19/10, F02M 21/02, F01L 1/18, F01L 3/00

(54) **GAS VALVE FOR AN INTERNAL COMBUSTION ENGINE**

(71) Applicant: Innio Jenbacher GmbH & Co OG, 6200 Jenbach (AT)
(72) Inventor: RIVELLINI, Sandro, 6020 Innsbruck (AT)
(74) Representative: Torggler & Hofmann Patentanwälte - Innsbruck

(57) **Abstract**

Gas valve, preferably a pre-chamber gas valve (2), for an internal combustion engine, comprising:
- a valve housing (31) having a valve seat (32),
- a valve body (30) movable along a longitudinal axis (33) arranged in the valve housing (31),
- at least one gas channel (34) arranged in the valve housing (31) configured to provide air, fuel or air-fuel mixture to be supplied to a target volume, in particular a pre-chamber (3), via a gap between the valve seat (32) and the valve body (30),

wherein the valve body (30) comprises at least one recess (35) configured to fluidly connect the at least one gas channel (34) with the target volume in at least one position of the valve body (30) relative to the valve housing (31),
wherein the at least one recess (35) is arranged such that
- the fluid connection between the at least one gas channel (34) and the target volume is established immediately when the valve body (30) is lifted off a valve seat (32) of the valve housing (31), and
- the fluid connection between the at least one gas channel (34) and the target volume is inhibited during a high lift section of the stroke of the valve body.

## Description

The present disclosure relates to a gas valve, preferably a pre-chamber gas valve, for an internal combustion engine according to the preamble of claim 1 and an internal combustion engine comprising such a gas valve.

Hereinafter, the state of the art will be explained with reference to an example embodiment of an internal combustion engine comprising a pre-chamber. Generally, this explanation analogously applies to any gas valves used for internal combustion engines.

Pre-chambers are used as ignition amplifiers for internal combustion engines, preferably starting from a certain size of internal gas engines (generally with cylinder capacity above about four liters), in order to properly ignite lean air-fuel-mixture in the large volume of the cylinders.

Such pre-chambers in most cases are supplied with air, fuel or an air-fuel-mixture separately from the main combustion chamber.

Therefore, it is known in the state of the art that pre-chamber assemblies for internal combustion engines comprise at least one pre-chamber gas valve for supplying air, fuel or an air-fuel-mixture to the pre-chamber, wherein the pre-chamber gas valve comprises a pre-chamber gas valve seat and a pre-chamber gas valve body.

Such pre-chamber gas valves in most cases are provided by passive gas valves, e.g., check valves or non-return valves, wherein during the inlet stroke of the internal combustion engine an inlet pressure of the fuel, air or air-fuel mixture to be fed into the pre-chamber exceeds a pressure present in the pre-chamber and therefore the passive pre-chamber gas valve opens.

Such passive pre-chamber gas valves are essentially not controllable and do not have the potential to control exact amounts supplied and timings for supplying to the pre-chamber. They are also sensitive to wear as the closing velocity is defined mainly by the gas pressure gradient and the spring load.

Therefore, such configurations have the disadvantage that they do not have the potential to control exact amounts supplied and timings for supplying the pre-chamber, as the pressure ratios can vary during the operation of the internal combustion engine (e.g. in reaction to changes in operation, load or quality of fuel).

In fact, it would be beneficial to provide a possibility to actively control a pre-chamber gas valve by an actuator.

But, as the assembly space is small and the error rate of small actuators is high, it would be advisable to actuate such a pre-chamber gas valve by use of already existing motions of an internal combustion engine.

Unfortunately, already existing motions of the internal combustion engine do not identically comply with needed actuation motions of a pre-chamber gas valve.

The object of the present disclosure is therefore to provide a gas valve, preferably a pre-chamber gas valve, for an internal combustion engine as well as an internal combustion engine having such a gas valve which at least partly improves upon the mentioned negative effects compared to the prior art and/or to provide a more reliable gas valve system and/or to provide a more consistent actuation of the gas valve and/or to provide a gas valve requiring less space and/or wherein already existing motions of the internal combustion engine can be used to actuate the gas valve.

This object is achieved with a gas valve, preferably a pre-chamber gas valve, for an internal combustion engine with the features of claim 1 and/or claim 11 as well as an internal combustion engine having such a gas valve.

According to a first aspect of the present disclosure a gas valve, preferably a pre-chamber gas valve, for an internal combustion engine comprises:
- a valve housing having a valve seat,
- at least one gas channel arranged in the valve housing configured to provide air, fuel or air-fuel mixture to be supplied to a target volume, in particular a pre-chamber, via a gap between the valve seat and the valve body, and
- a valve body movable along a longitudinal axis arranged in the valve housing, wherein the valve body comprises at least one recess configured to fluidly connect the at least one gas channel with the target volume in at least one position of the valve body relative to the valve housing,
wherein the at least one recess is arranged such that
- the at least one recess is arranged such that the fluid connection between the at least one gas channel and the target volume is established immediately when the valve body is lifted off a valve seat of the valve housing, and
- the fluid connection between the at least one gas channel and the target volume is inhibited during a high lift section of the stroke of the valve body.

According to a second aspect of the present disclosure a gas valve, preferably a pre-chamber gas valve, for an internal combustion engine comprises:
- a valve housing having a valve seat,
- at least one gas channel arranged in the valve housing configured to provide air, fuel or air-fuel mixture to be supplied to a target volume, in particular a pre-chamber, via a gap between the valve seat and the valve body, and
- a valve body movable along a longitudinal axis arranged in the valve housing, wherein the valve body comprises at least one recess configured to fluidly connect the at least one gas channel with the target volume in at least one position of the valve body relative to the valve housing,
- at least one first guiding surface on the valve body configured to cooperate with at least one second guiding surface of the valve housing for guiding the valve body in the valve housing,
wherein the at least one first guiding surface is arranged exclusively on a far side of the at least one recess from the valve seat and/or the at least one recess is arranged immediately adjacent to the valve seat, preferably wherein the at least one first guiding surface covers the at least one gas channel in a high lift section of the stroke of the valve body.

By use of a gas valve according to the present disclosure, the opening characteristic of the valve can be decoupled from the movement of the valve body in the valve housing. Therefore, an opening - a supplying of air, fuel or an air-fuel mixture from the at least one gas channel to the target volume - is done if these components are connected via the recess of the valve body, otherwise they are disconnected and a supply is interrupted.

In a specific embodiment of the disclosure, the valve body is guided longitudinally in the valve housing. During the movement of the valve body, a supply is implemented when the recess connects the at least one gas channel with the target volume. In contrast, the state of the art defines valve needles, wherein upon a start of movement of the valve needle (when the valve is lifted from a valve seat) the supply starts.

In this way, it is possible to adjust a supply characteristic of a valve, for example by modulating an already existing movement instead of directly adjusting the actuator movement regarding a desired or required supply characteristic.

Furthermore, by taking advantage of a system according to the present disclosure, already present motions of other components of the internal combustion engine may be transferred to actuate the gas valve, such that in an efficient and/or energy serving way a reliable actuation system of the pre-chamber gas valve can be provided.

A low lift stroke, a mid-section and/or the high lift section of the stroke of the valve body have to be understood as sections of movement of the valve body relative to the valve housing along the longitudinal axis differing from the position in which the valve body contacts the valve housing via the valve seat.

The valve housing and/or the valve body may comprise a single component part or several component parts joined together.

Already present internal combustion engines can be upgraded with at least one gas valve according to the present disclosure.

All measures and features described in connection with the prior art can also be taken in connection with the present disclosure.

The present disclosure can preferably be used in conjunction with a reciprocating piston engine, in particular driving a generator for creating electrical energy. Combinations of internal combustion engines driving a generator are known as gensets.

It can pe provided that the motion imparted on the gas valve body is essentially linear, particularly preferably essentially exclusively linear, i.e., without superposed rotational motions. Embodiments with rotational or mixed motions imparted on the gas valve body are in principle conceivable.

It can be provided that not exclusively a linear motion is imparted on the gas valve body for opening and/or closing the at least one gas valve, but preferably essentially only linear motions.

The present disclosure is also concerned with an arrangement comprising a pre-chamber and a gas valve according to the present disclosure.

Advantageous embodiments are defined in the dependent claims.

It can be provided that the fluid connection between the at least one gas channel and the target volume is established in a low lift section of the stroke of the valve body.

It can be provided that the at least one recess extends circumferentially around the whole or a part of the valve body.

It can be provided that the at least one recess is provided by a groove, comprising
- a groove cross-section,
- at least two groove flanks, and
- a groove base,
wherein the at least two groove flanks, viewed in the groove cross-section, each transition - preferably with at least one transition curvature - into the groove base.

It can be provided that the groove flanks are provided by curvatures - preferably comprising a constant radius having a finite value larger than zero -, that each transition into the groove base. The transition can be provided tangentially.

The groove base can be provided, viewed in the groove cross-section, linearly.

It can be provided that the valve body is guided in a bore of the valve housing extending between the valve seat and the at least one gas channel, preferably wherein the inner wall of the bore provides at least one second guiding surface.

It can be provided that the bore of the valve housing essentially comprises the same diameter as the valve body. In this context, essentially the same diameter has to be understood in such a way that the bore and the valve body comprise the same manufacturing measurements, wherein the necessary differences in the measurements can be provided by manufacturing tolerances (e.g. a H7/g6 clearance fit).

Preferably it can be provided that between the valve housing and the valve body a clearance fit is formed.

It can be provided that the at least one recess is provided in such a way that the target volume is connected to the at least one gas channel via the at least one recess in a position of the valve body relative to the valve housing 0% to 95%, preferably 0% to 85%, particular preferred 0% to 75%, of the longitudinal stroke of the valve body.

In this content, the longitudinal stroke of the valve body can be provided by the longitudinal range in which the valve body is moved during application, e.g., beginning from a position of the valve body, wherein the valve body is in contact with the valve seat, until a position of the valve body, wherein the valve body is maximally lifted up from the valve seat.

Such positions can be seen as a non-actuated position (the valve body is in contact with the valve seat) and a maximum actuated position (the valve body is maximally lifted up from the valve seat).

These positions - or at least one of them - can also be seen as end stroke positions.

It can be provided that the at least one recess is provided in such a way that in both end stroke positions of the valve body the at least one gas channel is disconnected from the target volume.

It can be provided that the disconnection of the at least one gas channel from the target volume is done by the interaction of the guided circumference of the valve body and the bore of the valve housing.

It can be provided that the valve body is pre-loaded by an energy storage, preferably a coil spring, against the valve seat.

It can be provided that guidance of the valve body is effected by the valve housing itself, preferably at an area of the valve housing facing away from the valve seat beginning at the at least one gas channel providing a second guiding surface. Alternatively, or additionally, the housing can be provided by guiding elements (e.g. a guide bushing) placed at or inside the valve housing for guiding the valve body.

It can be provided that a mechanical actuation system is provided for actuating the gas valve by imparting a motion on the gas valve, preferably the valve body, for opening and/or closing the at least one gas valve.

It can be provided that the mechanical actuation system is provided purely mechanically, wherein e.g., no electrical or hydraulic actuation (with a possible exception of hydraulic valve lash compensation) is done.

It can be provided that the gas valve according to the present disclosure is implemented as pre-chamber gas valve.

It can be provided that the mechanical actuation system comprises at least one pre-chamber gas valve rod.

It can be provided that a linear motion is imparted on the gas valve body for opening and/or closing the at least one gas valve by the pre-chamber gas valve rod of the mechanical actuation system.

The pre-chamber gas valve rod is provided e.g. to transfer actuation motions (preferably already present) from an actuator to the gas valve body, wherein by the pre-chamber gas valve rod a linear motion is imparted on the gas valve body.

It can be provided that the at least one pre-chamber gas valve rod is pivotably connected at a first end to the gas valve body and/or at a second end to an actuation system.

Therefore, it can be provided that the pre-chamber gas valve rod is used to transfer a motion of the actuation system into a linear motion which is used to be imparted by the pre-chamber gas valve rod on the gas valve body.

It can be provided that the pre-chamber gas valve rod comprises along its longitudinal extension at least two separate pre-chamber gas valve rod components, which are adjustably connected relative to each other, preferably by a screw connection, wherein a longitudinal extension of the pre-chamber gas valve rod can be adjusted.

By adjusting the longitudinal extension of the pre-chamber gas valve rod, e.g., the opening and/or closing characteristic of the gas valve can be adjusted, wherein the timing of opening and/or closing, the opening time (i.e., the time period during which the gas valve is open), the closing time (i.e., the time period during which the gas valve is closed) and/or the opening stroke of the gas valve body can be adjusted, wherein the supplied volume of air, fuel, or the air fuel mixture as well as the timing of the supplying via the gas valve are adjustable.

It can be provided that the pre-chamber gas valve rod comprises at least two pre-chamber gas valve rod components which are rotatably connected to each other, wherein the pre-chamber gas valve rod component contacting the gas valve body is pivotable relative to another one of the at least two pre-chamber gas valve rod components via a first pivot.

It can be provided that at least one of the at least two pre-chamber gas valve rod components comprises an L-shape. By use of an L-shape e.g. areas directly can be freed for additional components of the internal combustion engine.

It can be provided that the pre-chamber gas valve rod is provided by the at least two pre-chamber gas valve rod components which are rotatably connected to each other (e.g. wherein a crank mechanism and/or mechanical linkage is formed).

It can be provided that the pre-chamber gas valve rod component contacting the gas valve body comprises at the contact surface between the pre-chamber gas valve rod component and the gas valve body along its contact surface a variable distance from the first pivot.

By use of a variable distance from the first pivot, the pre-chamber gas valve rod component can transfer a linear motion to the gas valve body when the pre-chamber gas valve rod component is rotated around the first pivot (similar to a cam of a cam shaft).

Particularly preferably, by choosing an accurate variation of the distance of the contact surface from the first pivot, the supplied volume and the timing of the supplying via the gas valve are adjustable.

It can be provided that between the pre-chamber gas valve rod and the gas valve body at least one, preferably spherical and/or cylindrical (preferably with circular base area), decoupling component is arranged, transmitting an actuation motion from the pre-chamber gas valve rod to the gas valve body.

By use of such a decoupling element between the pre-chamber gas valve rod and the gas valve body, it can be provided that only linear motions acting along a longitudinal extension of the gas valve body are transmitted to the gas valve body. The gas valve body can therefore be prevented from other motions, e.g. oblique to the longitudinal extension of the gas valve body, of the pre-chamber gas valve rod (motions which might damage or affect the operation of the gas valve).

It can be provided that the mechanical actuation system is connected to and/or comprises a rocker arm.

It can be provided that the rocker arm is pivoted on a second pivot and configured to actuate at least one inlet valve and/or outlet valve of the internal combustion engine for opening and closing the at least one inlet valve and/or outlet valve, particularly preferred wherein a push rod is connected to the rocker arm for actuating the rocker arm and therefore the at least one inlet valve and/or outlet valve.

It can be provided that the mechanical actuation system is configured to transmit a rotational motion of a cam shaft of the internal combustion engine to the gas valve body, preferably wherein the gas valve is provided as pre-chamber gas valve.

In particularly preferred embodiments, the rotational motion of the cam shaft is transferred to a motion of the rocker arm through a push rod which is pivotably connected to the rocker arm. In such embodiments, preferably the rocker arm is configured to actuate the at least one inlet valve and/or the at least one outlet valve.

It can be provided that the gas valve body is configured to be moved linearly along its longitudinal axis relative to the gas valve seat to perform an opening and/or closing of the gas valve.

It can be provided that the gas valve comprises at least one spring, wherein the spring is configured to perform a closing motion of the gas valve and/or to keep the gas valve closed, preferably if no linear motion is imparted by the mechanical actuation system.

It can be provided that the at least one spring biases the gas valve body onto the valve seat.

In preferred embodiments the gas valve body is long enough to extend from the gas valve and/or the valve seat thereof to an exterior of a component part making up a part of the pre-chamber, preferably a top part of the pre-chamber.

Also, protection is sought for an internal combustion engine comprising at least one gas valve according to the present disclosure.

At least one main combustion chamber and a pre-chamber fluidically connected to the at least one main combustion chamber can be provided, wherein for supplying air, fuel or air-fuel mixture to the pre-chamber and/or the main combustion chamber the least one gas valve is provided.

A mechanical actuation system can be provided for actuating the gas valve by imparting a motion on the gas valve, preferably the valve body, for opening and/or closing the at least one gas valve.

It can be provided that by use of the mechanical actuation system a motion of a cam shaft of the internal combustion engine is transformed into an actuation motion of the gas valve.

Further details and advantages of the present disclosure are apparent from the accompanying figures and the following description of the drawings. The figures show:
- Fig. 1: a first embodiment of a pre-chamber assembly,
- Fig. 2: the first embodiment of Fig. 1 in a closed position of the pre-chamber gas valve,
- Fig. 3: the first embodiment of Fig. 1 in an open position of the pre-chamber gas valve,
- Fig. 4: a second embodiment of a pre-chamber assembly,
- Fig. 5: the second embodiment of Fig. 4 in a closed position of the pre-chamber gas valve,
- Fig. 6: the second embodiment of Fig. 4 in an open position of the pre-chamber gas valve,
- Fig. 7: a third embodiment of a pre-chamber assembly,
- Fig. 8: the third embodiment of Fig. 7 in a closed position of the pre-chamber gas valve,
- Fig. 9: the third embodiment of Fig. 7 in an open position of the pre-chamber gas valve,
- Fig. 10: an embodiment of a gas valve according to the present disclosure,
- Fig. 11 - 13: different positions of the valve body relative to the valve housing of the embodiment of a gas valve shown by Fig. 10, and
- Fig. 14: a diagram illustrating the supply characteristic of the embodiment of a gas valve shown by Fig. 10 to 13.

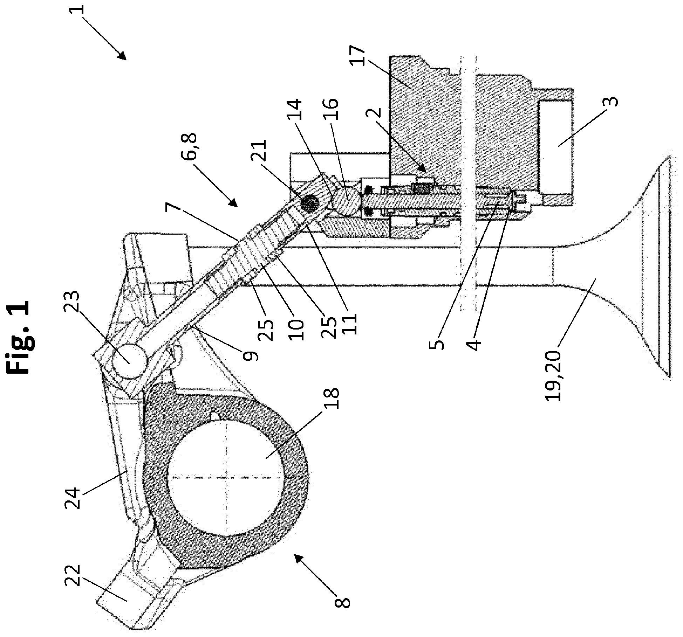

Fig. 1 discloses a first embodiment of a pre-chamber assembly 1 of an internal combustion engine.

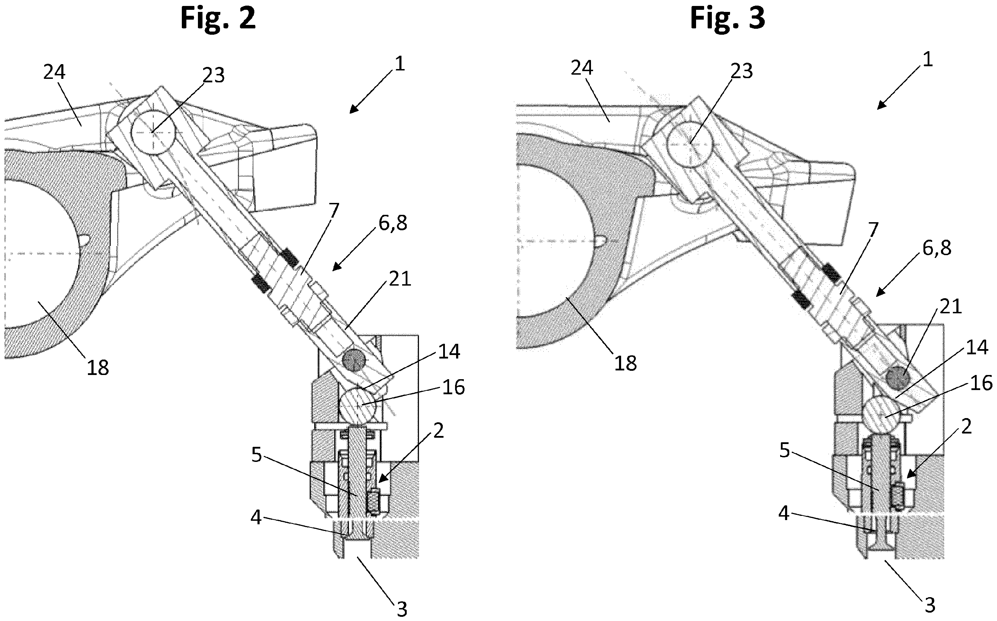

The first embodiment of a pre-chamber assembly 1 of Fig. 1 is shown in Fig. 2 in a closed position of the pre-chamber gas valve 2 and in Fig. 3 in an open position of the pre-chamber gas valve 2.

The first embodiment of the assembly 1 of Fig. 1 to 3 comprises a rocker arm 24 pivotally connected to the second pivot 18.

The rocker arm 24 is configured to actuate at least one inlet valve 19 and/or outlet valve 20 for opening and closing the at least one inlet valve 19 and/or outlet valve 20.

The at least one inlet valve 19 and/or outlet valve 20 is therefore connected to the rocker arm 24, wherein the pivoting motions of the rocker arm 24 are transformed in a known way to a linear operation for opening and closing the at least one inlet valve 19 and/or outlet valve 20 along its longitudinal axis.

The rocker arm 24 (as is known in the state of the art) is actuated by a push rod 27 (not shown for reasons of clarity) which can be connected to the rocker arm 24 at the connecting point 23, wherein the rocker arm 24 is pivotable and therefore the at least one inlet valve 19 and/or outlet valve 20 is linearly actuated.

The push rod 27 can be actuated by a cam shaft 28 of the internal combustion engine, wherein by the eccentric geometry of the cam shaft 28 the linear motion and actuation motion for the rocker arm 24 can by created.

Furthermore, the pre-chamber assembly 1 comprises a pre-chamber gas valve 2 for supplying air, fuel or an air-fuel-mixture to the pre-chamber 3.

The pre-chamber gas valve 2 comprises a pre-chamber gas valve seat 4 and a pre-chamber gas valve body 5, wherein by a linear motion of the pre-chamber gas valve body 5 the pre-chamber gas valve body 5 can be moved relatively to (lifted from) the pre-chamber gas valve seat 4 to perform for opening and/or closing the at least one pre-chamber gas valve 2.

In other words: The pre-chamber gas valve body 5 is configured to be moved linearly along its longitudinal axis relative to the pre-chamber gas valve seat 4 to perform an opening and/or closing of the pre-chamber gas valve 2.

For actuating the pre-chamber gas valve 2, a mechanical actuation system 6is provided.

The mechanical actuating system 6 of the first embodiment disclosed by Fig. 1 to 3 is provided by a pre-chamber gas valve rod 7.

The pre-chamber gas valve rod 7 is pivotably connected at a first end to the pre-chamber gas valve body 5 and/or at a second end in the connecting point 23 to the actuation system 8 (the rocker arm 24).

Furthermore, the pre-chamber gas valve rod 7 shown by Fig. 1 to 3 is linearly guided by the linear guiding device 21 (as can be seen in more detail by the two different positions of the pre-chamber gas valve rod 7 of Fig. 2 and 3) .

By the motion of the pre-chamber gas valve rod 7 caused by the rocker arm 24, the pre-chamber gas valve rod 7 imparts a linear motion on the pre-chamber gas valve body 5 via the contact surface 14 of the pre-chamber gas valve rod 7.

Between the pre-chamber gas valve rod 7 and the pre-chamber gas valve body 5, a spherical decoupling component 16 is provided, transmitting the linear motion from the pre-chamber gas valve rod 7 to the pre-chamber gas valve body 5.

By use of such a decoupling element 16 between the pre-chamber gas valve rod 7 and the pre-chamber gas valve body 5, essentially only linear motions acting along a longitudinal extension of the pre-chamber gas valve body 5 can be transmitted to the pre-chamber gas valve body 5. The pre-chamber gas valve body 5 can therefore be prevented from other motions, e.g., oblique to the longitudinal extension of the pre-chamber gas valve body 5, done by the pre-chamber gas valve rod 7 (motions which might damage or affect the operation of the pre-chamber gas valve 2).

Specifically in this embodiment, the linear motion imparted on the pre-chamber gas valve body 5 is used to implement an opening of the pre-chamber gas valve 2. For closing the pre-chamber gas valve 2, a spring (not shown for reasons of clarity) is provided, wherein the spring is configured to perform a closing motion of the pre-chamber gas valve 2 and/or to keep the pre-chamber gas valve 2 closed.

The pre-chamber gas valve rod 7 of Fig. 1 to 3 comprises along its longitudinal extension three separate pre-chamber gas valve rod components 9, 10, 11, which are adjustably connected relative to each other (in this embodiment by a screw connection), wherein a longitudinal extension of the pre-chamber gas valve rod 7 can be adjusted.

In this embodiment, an axis of the screw connection and a longitudinal axis of the pre-chamber gas valve rod 7 essentially coincide.

To lock the connection of the three separate pre-chamber gas valve rod components 9, 10, 11, furthermore, two counter nuts 25 are provided in this embodiment. Also, embodiments using only one counter nut 25 are quite possible.

By adjusting the longitudinal extension of the pre-chamber gas valve rod 7, the opening and/or closing characteristic of the pre-chamber gas valve 2 can be adjusted.

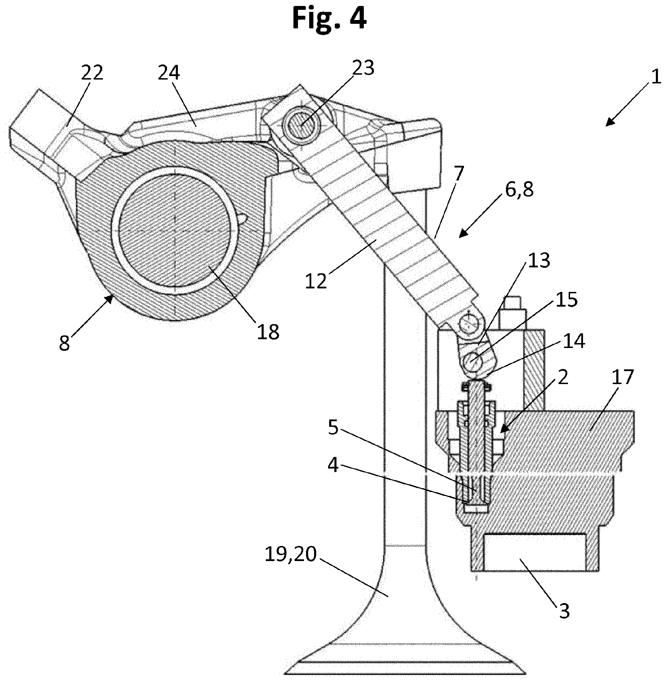

Fig. 4 discloses a second embodiment of a pre-chamber assembly 1.

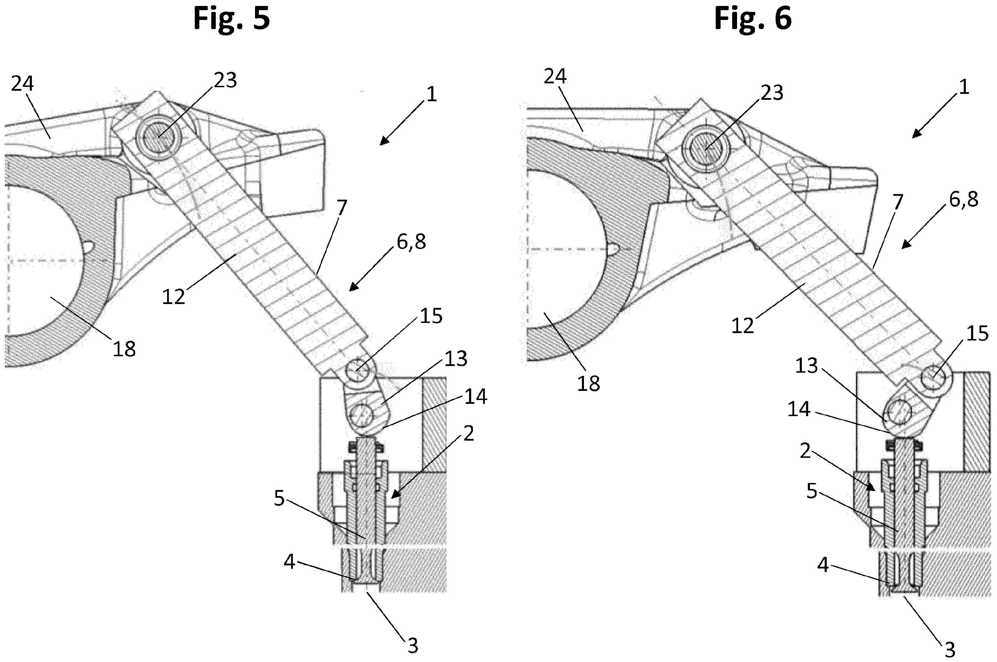

The second embodiment of a pre-chamber assembly 1 of Fig 4 is shown in Fig. 5 in a closing position of the pre-chamber gas valve 2 and in Fig. 6 in an opening position of the pre-chamber gas valve 2.

Compared to the first embodiment, the second embodiment of Fig. 4 to 6 comprises a pre-chamber gas valve rod 7 provided by two pre-chamber gas valve rod components 12, 13 which are rotatably connected to each other, wherein the pre-chamber gas valve rod component 13 contacting the pre-chamber gas valve body 5 is pivotally connected to a first pivot 15.

The pre-chamber gas valve rod component 13 contacting the pre-chamber gas valve body 5 comprises at the contact surface 14 between the pre-chamber gas valve rod component 13 and the pre-chamber gas valve body 5 along its contact surface a variable distance from the first pivot 15.

By use of a variable distance of the contact surface 14 from the first pivot 15, the pre-chamber gas valve rod component 13 can transfer a linear motion to the pre-chamber gas valve body 13 when the pre-chamber gas valve rod component 13 is rotated around the first pivot 15.

By choosing an accurate variation of the distance of the contact surface 14 from the first pivot 15, the supplied volume and the timing of the supplying via the pre-chamber gas valve 2 are adjustable (in other words: the opening and/or closing characteristic of the pre-chamber gas valve 2 can be adjusted).

The remaining characteristics of the second embodiment shown by Fig. 4 to 6 essentially comply with the first embodiment shown by Fig. 1 to 3.

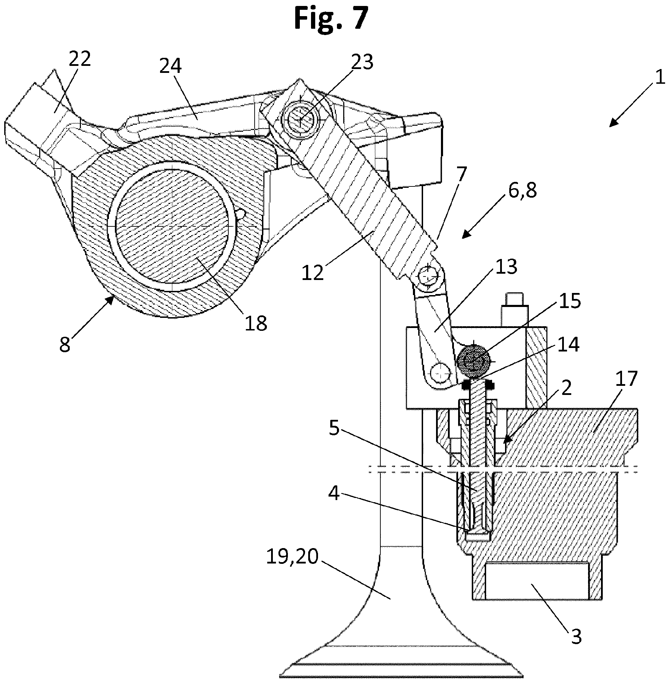

Fig. 7 discloses a third embodiment of a pre-chamber assembly 1.

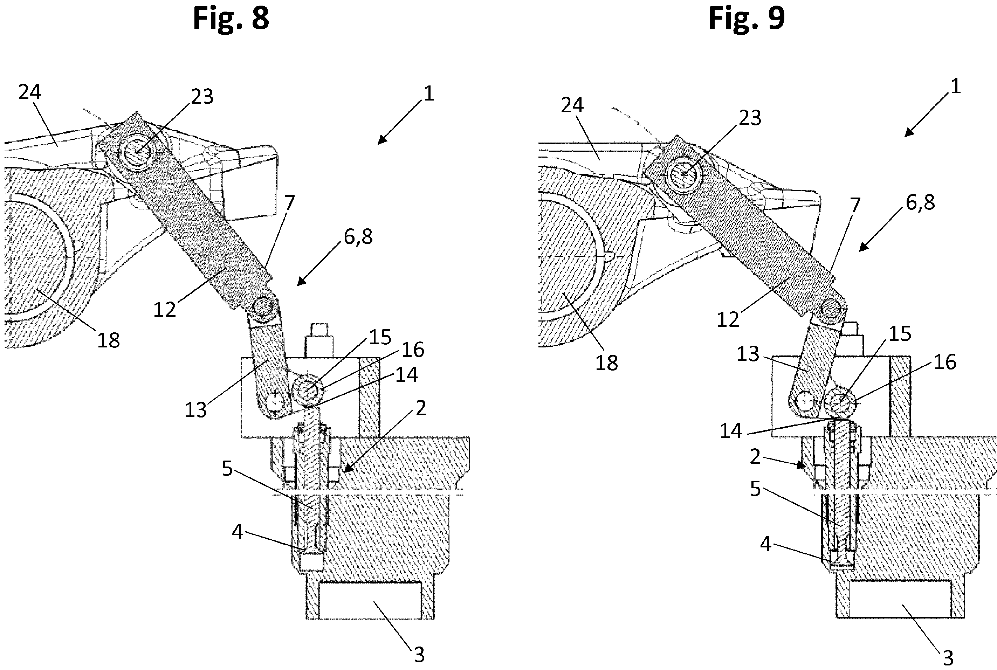

The third embodiment of a pre-chamber assembly 1 of Fig 7 is shown in Fig. 8 in a closed position of the pre-chamber gas valve 2 and in Fig. 9 in an open position of the pre-chamber gas valve 2.

As well as the second embodiment, also the third embodiment of Fig. 7 to 9 comprises a pre-chamber gas valve rod 7 provided by two pre-chamber gas valve rod components 12, 13 which are rotatably connected to each other, wherein the pre-chamber gas valve rod component 13 contacting the pre-chamber gas valve body 5 is pivotally connected to a first pivot 15.

Compared to the second embodiment, the third embodiment disclosed by Fig. 7 to 9 comprises a pre-chamber gas valve rod component 13 designed with an L-shape, whereby the area directly above the pre-chamber gas valve 2 can be freed for additional components of the internal combustion engine.

The pre-chamber gas valve rod component 13 is pivotably arranged at the first pivot 15.

The pre-chamber gas valve rod component 13 furthermore comprises a decoupling component 16 rotatably connected to the pre-chamber gas valve rod component 13 around the first pivot 15, wherein the contacting surface 14 between the pre-chamber gas valve rod component 13 and the pre-chamber gas valve body 5 is formed by the circumference of the decoupling component 16.

The advantage of the usage of such a decoupling component 16 is that essentially only linear motions acting along a longitudinal extension of the pre-chamber gas valve body 5 can be transmitted to the pre-chamber gas valve body 5.

The pre-chamber gas valve body 5 can therefore be prevented from other motions, e.g., oblique to the longitudinal extension of the pre-chamber gas valve body 5, done by the pre-chamber gas valve rod 7 (motions which might damage or affect the operation of the pre-chamber gas valve 2).

The remaining characteristics of the third embodiment shown by Fig. 7 to 9 are essentially analogous with respect to the second embodiment shown by Fig. 4 to 6.

As it can be seen by the previous Figures and the shown embodiments, it is preferable to use already existing motions of the internal combustion engine for actuating e.g., the pre-chamber gas valve 2 or other gas vales 26 of the internal combustion engine.

As these motions (already present for different purposes) do not always or ideally correspond to desired motions for actuating a gas valve 26 (e.g., a pre-chamber gas valve 2), it is desirable to provide a possibility to reconcile these already available motions with desired motions or characteristics for actuating a gas valve 26. These would be possible by use of cost and place consuming transmissions or - as shown in the following Figures - by use of an embodiment of a gas valve 26 according to the present disclosure.

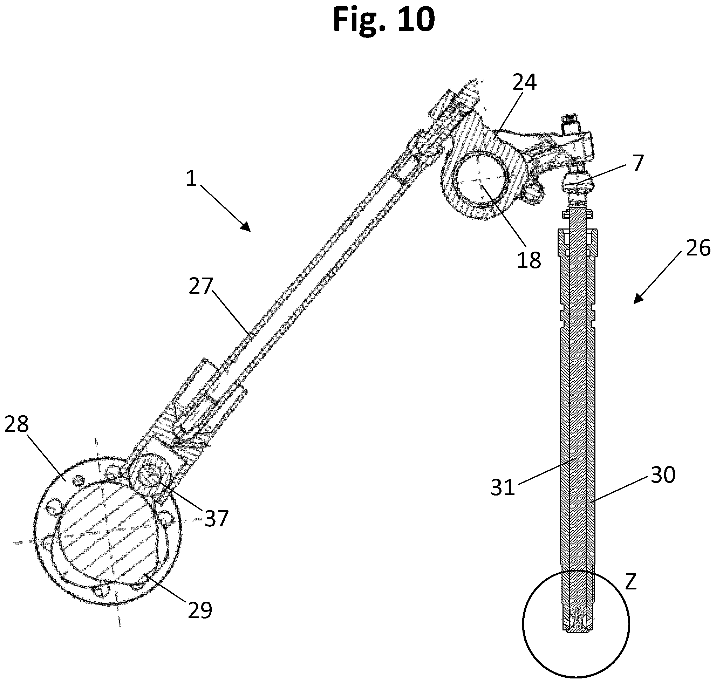

Fig. 10 discloses an embodiment of a gas valve 26 according to the present disclosure.

As can be seen by Fig. 10, the gas valve 26 is actuated by a mechanical actuation system 6.

The mechanical actuation system 6 transmits a motion of the cam shaft 28 - exactly speaking a linear motion of the roller tappet 37 guided at the cam 29 of the cam shaft - via the push rod 27 to a rocker arm 24, wherein the rocker arm 24 is pivotally connected around the second pivot 18 to redirect the motion of the push rod 27 to the pre-chamber gas valve rod 7.

By the motion of the pre-chamber gas valve rod 7 caused by the rocker arm 24, the pre-chamber gas valve rod 7 imparts a linear motion on the pre-chamber gas valve body 5 via the contact surface 14 of the pre-chamber gas valve rod 7.

To use this motion of the already existing system - the cam shaft - of the internal combustion engine to actuate the gas valve 26 (in this case the pre-chamber gas valve 2), the gas valve 26 comprises a recess 35 configured to fluidly connect the gas channels 34 with the pre-chamber 3 in at least one position of the valve body 30 relative to the valve housing 31.

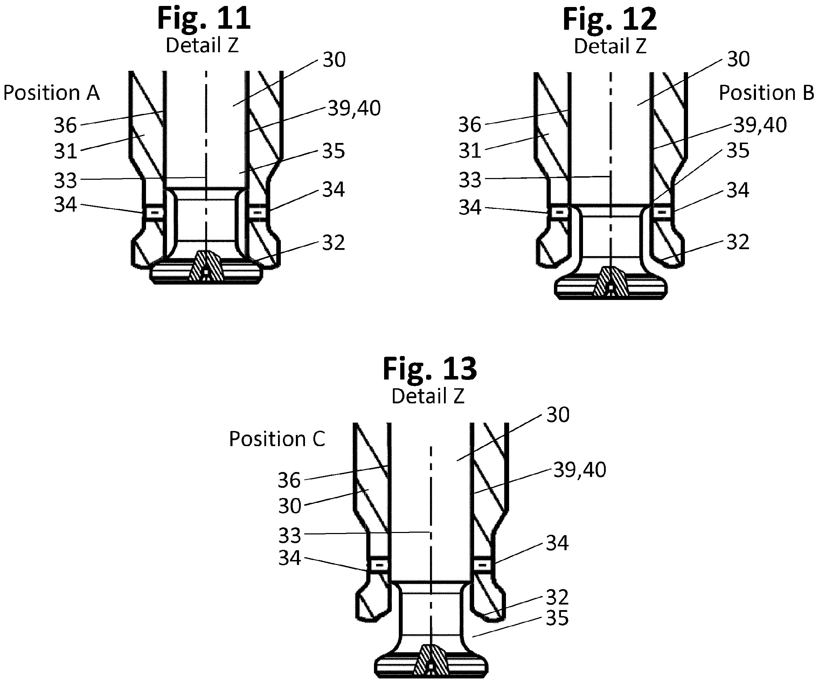

This can be seen in more detail by Fig. 11 to 13, wherein the detail Z of Fig 10 is shown enlarged in three different positions A, B, C.

As can be seen, the valve body 30 is guided linear along its longitudinal axis 33, wherein the valve body 30 with a first guiding surface 39 is arranged and guided in by the bore 36 of the valve housing 31 (wherein the bore provides a second guiding surface 40 interacting with the first guiding surface).

The bore 36 of the valve housing 31 essentially comprises the same diameter as the valve body 30, wherein in this case between the valve housing 31 and the valve body 30 a clearance fit is formed.

Therefore, guidance of the valve body 30 is effected by the valve housing 31 itself, especially at an area of the valve housing 31 facing away from the valve seat 32 beginning at the gas channels 34.

The valve body 30 is pre-loaded by a coil spring (not shown in the figures) against the valve seat 32.

The recess 35 extends circumferentially around the whole valve body 30 and is designed in such a way - as will be explained in the following making reference to Fig. 11 to 13 - that in two end stroke positions A and C of the valve body 30 the gas channels 34 are disconnected from the pre-chamber 3.

Fig. 11 therefore discloses a position A of the valve body 30 relative to the valve housing 31, wherein the valve body 30 is pre-loaded against the valve seat 32. This position can be seen as non-actuated position of the gas valve 26, start position, first end stroke position and/or zero-stroke position.

Within this position A shown by Fig. 11, the gas channels 34 are disconnected from the pre-chamber 3.

Such position A in most cases will be present during combustion inside the pre-chamber 3 and the main combustion chamber.

Following the position A - during an initial phase of the stroke of the valve body 30 -, the gas channels 34 and the pre-chamber are fluidically connected (as shown by the position B by Fig. 12).

The fluidically connection between the gas channels 34 and the pre-chamber via the recess is provided stating at the moment when the valve body 30 is lifted (in other words: distanced) from the valve seat 32.

This fluid connection between the gas channels 34 and the pre-chamber is established during a mid phase, wherein air, fuel or an air-fuel mixture can be supplied into the pre-chamber from the gas channels 34 via the recess 35.

This connection - and therefore the supplying phase - is held constant during the further movement of the valve body 30 until position C (shown by Fig. 13) is reached.

At this point, the fluid connection between the gas channel 36 and the pre-chamber 3 is inhibited during an end phase.

Fig. 13 discloses the maximum stroke of the valve body 30 with respect to the valve housing 31 (the maximal lift of the valve body 30).

This position C, shown by Fig. 13, can be seen as maximally actuated position of the gas valve 26, end position and/or second end stroke position.

After having reached position C, the valve body returns into the start position A in a reverse direction via passing position B.

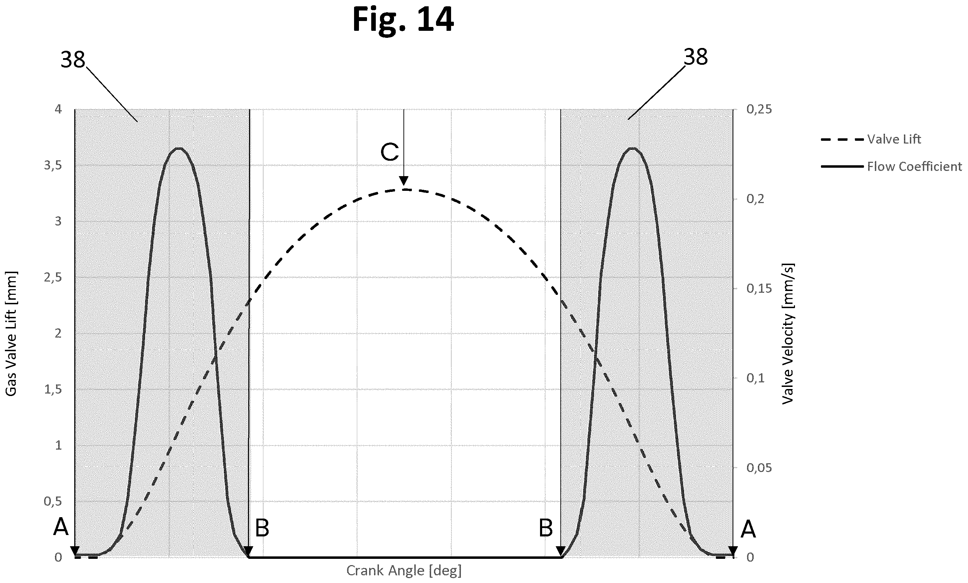

Fig. 14 discloses a diagram illustrating the supply characteristic of the embodiment of a gas valve 26 shown by Fig. 10 to 13 with respect to the crank angle degree of the internal combustion engine.

Within this diagram, the valve lift (solid black line) can be seen with respect to the crank angle. Furthermore, the positions A, B, C - known by Fig. 11 to 13 - are marked.

As can be seen in the gray marked regions 38 of the diagram, the pre-chamber 3 is fluidically connected with the supply channels 34 via the recess 35 of the gas valve 26.

Furthermore, by the dashed line the speed during actuation (and therefore the acceleration) of the valve body 30 can be seen.

### List of used reference signs:

- 1: pre-chamber assembly
- 2: pre-chamber gas valve
- 3: pre-chamber
- 4: pre-chamber gas valve seat
- 5: pre-chamber gas valve body
- 6: mechanical actuation system
- 7: pre-chamber gas valve rod
- 8: actuation system
- 9: pre-chamber gas valve rod component
- 10: pre-chamber gas valve rod component
- 11: pre-chamber gas valve rod component
- 12: pre-chamber gas valve rod component
- 13: pre-chamber gas valve rod component
- 14: contact surface
- 15: first pivot (of pre-chamber gas valve rod)
- 16: decoupling component
- 17: cylinder head
- 18: second pivot (of rocker arm)
- 19: inlet valve
- 20: outlet valve
- 21: linear guiding
- 22: connecting point (push rod)
- 23: connecting point (pre-chamber gas valve rod)
- 24: rocker arm
- 25: counter nut
- 26: gas valve
- 27: push rod
- 28: cam shaft
- 29: cam
- 30: gas valve body
- 31: gas valve housing
- 32: valve seat
- 33: longitudinal axis
- 34: gas channel
- 35: recess
- 36: bore
- 37: roller tappet
- 38: regions
- 39: guiding surface
- 40: guiding surface
- A: position of the valve body
- B: position of the valve body
- C: position of the valve body

## Claims

1. Gas valve, preferably a pre-chamber gas valve (2), for an internal combustion engine, comprising:
- a valve housing (31) having a valve seat (32),
- at least one gas channel (34) arranged in the valve housing (31) configured to provide air, fuel or air-fuel mixture to be supplied to a target volume, in particular a pre-chamber (3), via a gap between the valve seat (32) and the valve body (30), and
- a valve body (30) movable along a longitudinal axis (33) arranged in the valve housing (31), wherein the valve body (30) comprises at least one recess (35) configured to fluidly connect the at least one gas channel (34) with the target volume in at least one position of the valve body (30) relative to the valve housing (31),
**characterized in that** the at least one recess (35) is arranged such that
- the at least one recess (35) is arranged such that the fluid connection between the at least one gas channel (34) and the target volume is established immediately when the valve body (30) is lifted off a valve seat (32) of the valve housing (31), and
- the fluid connection between the at least one gas channel (34) and the target volume is inhibited during a high lift section of the stroke of the valve body.

2. Gas valve according to claim 1, wherein the fluid connection between the at least one gas channel (34) and the target volume is established in a low lift section of the stroke of the valve body.

3. Gas valve according to at least one of the preceding claims, wherein the valve body (30) is pre-loaded by an energy storage, preferably a coil spring, against the valve seat (32).

4. Gas valve according to at least one of the preceding claims, wherein the at least one recess (35) extends circumferentially around the whole or a part of the valve body (30).

5. Gas valve according to at least one of the preceding claims, wherein the valve body (30) is guided in a bore (36) of the valve housing (31) extending between the valve seat (32) and the at least one gas channel (34), preferably wherein the bore (36) of the valve housing (31) essentially comprises the same diameter as the valve body (30), particular preferred wherein between the valve housing (31) and the valve body (30) a clearance fit is formed.

6. Gas valve according to at least one of the preceding claims, wherein the at least one recess (35) is provided in such a way, that the target volume is connected to the at least one gas channel (34) via the at least one recess (35) in a position of the valve body (30) relative to the valve housing (31) 0% to 95%, preferably 0% to 85%, particular preferred 0% to 75%, of the longitudinal stroke of the valve body (30).

7. Gas valve according to at least one of the preceding claims, wherein the at least one recess (35) is provided in such a way, that in both end stroke positions (A,C) of the valve body (30) the at least one gas channel (34) is disconnected from the target volume.

8. Gas valve according to at least one of the preceding claims, wherein guidance of the valve body (30) is effected by the valve housing (31) itself, preferably at an area of the valve housing (31) facing away from the valve seat (32) beginning at the at least one gas channel (34) .

9. Gas valve according to at least one of the preceding claims, wherein the valve body (30) comprises at least one first guiding surface (39) extending along the longitudinal axis (33).

10. Gas valve according to at least one of the preceding claims, wherein a mechanical actuation system (6) is provided for actuating the gas valve (26) by imparting a motion on the gas valve (26), preferably the valve body (30), for opening and/or closing the at least one gas valve (26).

11. Gas valve, preferably a pre-chamber gas valve (2), for an internal combustion engine, in particular according to at least one of the preceding claims, comprising:
- a valve housing (31) having a valve seat (32),
- at least one gas channel (34) arranged in the valve housing (31) configured to provide air, fuel or air-fuel mixture to be supplied to a target volume, in particular a pre-chamber (3), via a gap between the valve seat (32) and the valve body (30), and
- a valve body (30) movable along a longitudinal axis (33) arranged in the valve housing (31), wherein the valve body (30) comprises at least one recess (35) configured to fluidly connect the at least one gas channel (34) with the target volume in at least one position of the valve body (30) relative to the valve housing (31),
- at least one first guiding surface (39) on the valve body (30) configured to cooperate with at least one second guiding surface (40) of the valve housing (31) for guiding the valve body (30) in the valve housing (31),
**characterized in that** the at least one first guiding surface (39) is arranged exclusively on a far side of the at least one recess (35) from the valve seat (32) and/or the at least one recess (35) is arranged immediately adjacent to the valve seat (32), preferably wherein the at least one first guiding surface (39) covers the at least one gas channel (34) in a high lift section of the stroke of the valve body (30).

12. Internal combustion engine comprising gas valve (26) according to the preceding claims.

13. Internal combustion engine according to claim 12, wherein there is provided at least one main combustion chamber and a pre-chamber (3) fluidically connected to the at least one main combustion chamber, wherein for suppling air, fuel or air-fuel mixture to the pre-chamber (3) and/or the main combustion chamber the least one gas valve (26) is provided.

14. Internal combustion engine according to claim 12 or 13, wherein a mechanical actuation system (6) is provided for actuating the gas valve (26) by imparting a motion on the gas valve (26), preferably the valve body (30), for opening and/or closing the at least one gas valve (26).

15. Internal combustion engine according to claim 14, wherein by the mechanical actuation system (6) a motion of a cam shaft (28) of the internal combustion engine is transformed into an actuation motion of the gas valve (26) .
